# EUROPEAN PATENT SPECIFICATION

(11) **EP 2 412 761 B1**
(45) Date of publication and mention of the grant of the patent: **31.08.2016**
(21) Application number: 10755669.8
(22) Date of filing: 25.03.2010
(51) Int. Cl.: C09D 11/328

(54) **INK COMPOSITION AND METHOD FOR PRODUCING DYED POLYAMIDE-BASED FIBER**
TINTENZUSAMMENSETZUNG UND VERFAHREN ZU HERSTELLUNG GEFÄRBTER FASERN AUF POLYAMIDBASIS
COMPOSITION D'ENCRE ET PROCÉDÉ DE PRODUCTION DE FIBRE COLORÉE À BASE DE POLYAMIDE

(30) Priority: 27.03.2009 JP 2009078076
(43) Date of publication of application: 01.02.2012
(73) Proprietor: Nippon Kayaku Kabushiki Kaisha, Tokyo 102-8172 (JP)
(72) Inventor: SHIMIZU, Shinsuke, Tokyo 115-8588 (JP); UMEDA, Mariko, Tokyo 115-8588 (JP); SUZUKI, Yuji, Tokyo 115-8588 (JP); MIYATA, Akira, Tokyo 115-8588 (JP)
(74) Representative: Gille Hrabal
(86) International application number: PCT/JP2010/002102
(87) International publication number: WO 2010/109867

(56) References cited:
- EP-A2- 1 010 802
- WO-A1-2009/104547
- WO-A1-2009/104547
- JP-A- 4 036 362
- JP-A- 2004 155 869
- JP-A- 2004 292 522
- JP-A- 2004 346 134
- JP-A- 2007 119 657
- JP-A- 2008 231 341
- JP-A- 2008 266 537
- JP-A- 2009 057 502

## Description

### Technical Field

The present invention relates to an ink composition for dyeing polyamide fibers and a method for textile printing polyamide fibers by using it.

### Background Art

Inkjet textile printing of fibers by using an inkjet printer has a number of advantages, compared with screen textile printing, roller textile printing and rotary textile printing, such that the plate making step is not required and thus its process can be simplified, digitalized design can be printed as it is via a computer, it is possible to produce various kinds of products even in small amounts, and that the amount of waste liquids of color paste containing dyes and the like can be significantly reduced. On the other hand, it has had problems such that the print processing speed is low and it is difficult to reproduce deep colors compared with the conventional plate-making textile printing. Therefore, inkjet textile printing has been frequently used in production of printed samples and in small-scale production.

In recent years, inkjet textile printing has been widespread on the backgrounds such as significant improvement in printing speed of inkjet printers due to technical progress in image processing by means of a computer and in print head manufacturing, and market requirements for digitalization of print design, diversification of print processing and smaller lot.

Usually in an inkjet printer using an aqueous ink, when print data are sent to the nozzle after not discharging ink for a while and printing is started with the nozzle, there are often troubles such as delayed or disturbed discharge of ink or no-discharge of ink. Specifically, in an serial printer for example, printing is performed by moving the carriage equipped with a head back and forth. However, not all such nozzles are used all the way while printing, there are some nozzles, for example, discharging no ink outward and discharging ink only homeward, and said nozzles often have troubles such as delayed discharge of ink. The period of time in which said certain nozzle do not discharge ink is about 2 to 10 seconds. As a performance of an ink used for industrial inkjet printers, performance of carrying out normal and good discharge even after the elapsed time in which the nozzle does not discharge ink and is left to stand, or good discharge performance after being left to stand, is required.

As a dye ink for inkjet textile printing, acid dyeacid dye inks used mainly for polyamide fibers such as silk and nylon; dispersion dye inks used mainly for polyester fibers; reactive dye inks used mainly for cellulose fibers such as cotton and rayon; and the like have been commercially available. Those dye inks for inkjet textile printing are generally water-based inks in which a dye is dissolved or dispersed in water. To said inks for inkjet textile printing, a glycol such as ethylene glycol, diethylene glycol, propylene glycol and triethylene glycol, or a compound of monoalkyl ether or the like of these glycols, or an organic solvent such as glycerine, or the like is added for the purpose of preventing the ink from drying due to moisture evaporation and adjusting the ink Viscosity.

Further, in recent years, as described in Patent Literature 1, a highly durable inkjet head for industrial use requiring a viscosity of about 8 to 20 mPa·s as a physical property of the ink for securing discharge stability and a high-speed printer equipped with such an inkjet head have been developed. Said Patent Literature 1 discloses an inkjet ink containing polypropylene glycol.

Patent Literature 2 discloses an acid dyeacid dye ink composition with good discharge properties, containing a compound in which polyethylene glycol is added to glycerine.

Patent Literature 3 discloses an ink for inkjet recording with improvement in discharge stability against temperature changes of ink and frequency responsiveness, containing a (meth)acrylic acid copolymer and the like together with a coloring material.

Patent Literature 4 discloses a water-based ink excellent in drying resistance of the pen tip of writing tools, containing a coloring material, water and polyoxyalkylene diglyceryl ether.

Patent Literature 5 discloses an ink for inkjet systems, containing water, a self-dispersion-type pigment and polyoxy propylene diglyceryl ether.

However, there is no ink known as an ink, in particular as ink for inkjet textile printing for polyamide fibers, containing a water-soluble coloring matter such as acid dye, being excellent in storage stability and satisfying discharge performance in any of low to high driving frequencies and discharge performance after being left standing which are required for industrial high-speed inkjet printers.

### Related technical Literature

### Patent Literature

Patent Literature 1: National Publication of International Patent Application No. 2005-520015 A
Patent Literature 2: Japanese Patent Laid-Open No. 2000-327978 A
Patent Literature 3: Japanese Patent Laid-Open No. 10-53739 A
Patent Literature 4: Japanese Patent Laid-Open No. 4-36362 A
Patent Literature 5: Japanese Patent Laid-Open No. 2004-155869 A

### Summary of the Invention

### Problems to Be Solved by the Invention

It is an object of the present invention to develop a water-based ink composition for dyeing polyamide fibers, which contains a water-soluble dye such as acid dye, has a viscosity suitable for printers (industrial inkjet printers) equipped with an industrial inkjet head, and is excellent in stability of various discharges, such as usual discharge, discharge after being left to stand and discharge under the low to high frequency driving conditions and excellent in storage stability.

### Means of Solving the Problems

The present inventors have intensively studied to solve the problems as described above and found that the above-described problems can be solved by a water-based ink composition for dyeing polyamide fibers, which contains at least one kind of dye selected from the group consisting of acid dyes, direct dyes and reactive dyes as a coloring matter and further contains a specific compound represented by the following formula (1) and ethylene glycol, and the present invention has been completed.

That is, the present invention relates to:
(1) A water-based ink composition for dyeing polyamide fibers, containing at least one kind of dye selected from the group consisting of acid dyes, direct dyes and reactive dyes, a compound having an average molecular weight of 340 to 2200 represented by the following formula (1), and ethylene glycol: 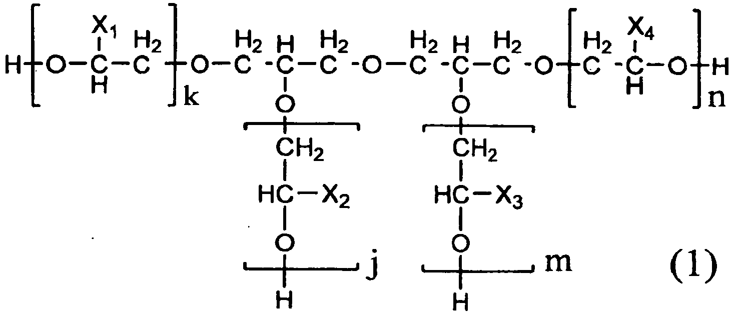 [wherein,
   X₁, X₂, X₃ and X₄ each independently represent a hydrogen atom or a methyl group;
   each of j, k, m and n represents a number, the sum of which is 4 or more and 40 or less],
(2)
   The water-based ink composition according to the above-described (1), wherein all of X₁, X₂, X₃ and X₄ in the formula (1) are hydrogen atoms or methyl groups,
(3) The water-based ink composition according to the above-described (1) or (2), wherein all of X₁, X₂, X₃ and X₄ in the formula (1) are methyl groups,
(4) The water-based ink composition according to any one of the above-described (1) to (3), wherein the content of ethylene glycol is 5 to 35% by mass based on the total amount of the water-based ink composition,
(5) The water-based ink composition according to any one of the above-described (1) to (4), wherein the viscosity of the water-based ink composition at 25°C is in the range of 3 to 20 mPa·s,
(6) The water-based ink composition according to the above-described (5), wherein the viscosity of the water-based ink composition at 25°C is in the range of 8 to 20 mPa·s,
(7)
   A method for producing dyed polyamide fibers, comprising a step of applying the water-based ink composition according to any one of the above-described (1) to (6) to polyamide fibers by using an inkjet printer, a step of fixing the dye in the water-based ink composition applied in said step to the above polyamide fibers by heat, and a step of washing unfixed dye remaining in the above polyamide fibers,
(8) The method for producing dyed polyamide fibers according to the above-described (7), which further comprises a step of pretreating polyamide fibers where the above polyamide fibers before applying the water-based ink composition are impregnated with an aqueous solution at least containing one or more kinds of sizing agents and a pH adjuster,
(9) The water-based ink composition according to any one of the above-described (1) to (6), which further contains a water-soluble organic solvent other than ethylene glycol,
(10)
   The water-based ink composition according to the above-described (9), which contains polyhydric alcohol other than ethylene glycol as a water-soluble organic solvent,
(11) The water-based ink composition according to the above-described (9) or (10), which contains a pyrrolidones as a water-soluble organic solvent,
(12) The water-based ink composition according to any one of the above-described (9) to (11), which contains glycerine as a water-soluble organic solvent,
(13) The water-based ink composition according to any one of the above-described (9) to (12), which contains 2-pyrrolidone as a water-soluble organic solvent,
(14) The water-based ink composition according to any one of the above-described (10) to (13), wherein the content of a polyhydric alcohol other than ethylene glycol is 5 to 15% by mass based on the total amount of the water-based ink composition,
(15) The water-based ink composition according to any one of the above-described (11) to (14), wherein the content of a pyrrolidones is 0.5 to 5% by mass based on the total amount of the water-based ink composition,
(16)
   The water-based ink composition according to any one of the above-described (1) to (6) and (9) to (15), which further contains, as a pH adjuster, tri C1-C4 alkylamine which may be substituted by a hydroxy group,
(17) The water-based ink composition according to any one of the above-described (1) to (6) and (9) to (16), wherein the content of water is 30 to 50% by mass based on the total amount of the water-based ink composition,
(18) The water-based ink composition according to any one of the above-described (1) to (6) and (9) to (17), wherein the content of the compound having an average molecular weight of 340 to 2200 represented by the above-described formula (1) is 5 to 40% by mass based on the total amount of the water-based ink composition,
(19) The water-based ink composition according to any one of the above-described (1) to (6) and (9) to (18), wherein the dye is at least one dye selected from acid dyes and direct dyes.

### Effect of the Invention

The water-based ink composition of the present invention contains the dye described above, particularly the water-soluble dye as described above, whereby it has effects such as: being suitable for dyeing polyamide fibers, being excellent in ink storage stability, having a viscosity suitable for printers equipped with an industrial inkjet head requiring a high viscosity ink (industrial inkjet printers), and being excellent in stability of various discharges such as usual discharge, discharge after being left to stand and discharge in low and high frequency driving. In addition, with respect to the polyamide fibers produced by the production method of the present invention, fixability of the dye to the fibers is good.

### Mode for Carrying Out the Invention

The ink composition of the present invention is substantively a water-based ink composition in solution, containing at least one kind of dye selected from the group consisting of acid dyes, direct dyes and reactive dyes (hereinafter, these three kinds of dyes are referred to as the dyes in three regions) as a coloring matter, and further containing a compound represented by the above-described formula (1) and ethylene glycol.

Any of the above-described dyes used in the present invention is a water-soluble dye, and usually one which is dissolved at least in water at a concentration of 10% by mass or more is preferable. However, acid dyes are known as low water-soluble, and usually one which is dissolved in water at a concentration of 2%o by mass or more can be used.

As a dye for dyeing polyamide fibers, an acid dye is generally used, and a direct dye and further a reactive dyereactive dye are also used in some cases.

In the case of dyeing cellulose fibers with a reactive dye, the reactive group which the reactive dye has in the molecule is reacted with a hydroxy group and the like in the cellulose fibers to form a covalent bond, whereby said fibers are dyed. On the other hand, polyamide fibers have an amino group in the fiber, and this amino group and the acidic functional group such as a sulfo group in the dye molecule form an ionic bond, whereby said fibers are dyed. The reactive dye includes one having a sulfuric acid ester group as a leaving group in the molecule, and such a dye makes it difficult to dye the polyamide fibers when the acidic functional group leaves. Therefore, as a dye contained in the ink composition of the present invention, one having an acidic functional group (preferably, a sulfo group) which does not leave is preferably used. Such a dye, even in any of the above-described three regionsregions, can be used. In this regard, even a reactive dye having the above-described sulfuric acid ester group as a leaving group can be used in the ink composition of the present invention as long as it further has, in the dye molecule, an acidic functional group which does not leave.

The ink composition of the present invention may contain 1 kind of dye or a plurality of dyes, for example, about 2 to 3 kinds of dyes. In the case of containing a plurality of dyes, for example, a plurality of dyes selected in any one of the above-described three regions may be contained or a plurality of dyes selected in the plural regions may be contained. One kind of dye may be respectively selected in each of the regions and the total 3 kinds of dyes may be contained. In addition, a plurality of dyes may be selected in any of the regions, and 3 kinds or more of the dyes may be contained. Further, 2 regions or 1 region may be selected from the above-described three regions, and a single dye or a plurality of dyes may be selected in the region(s) and contained in the ink composition of the present invention.

It is preferable that 1 region is selected from the three regions, a single or a plurality of dyes are selected in the region and that said dye(s) is contained in the ink composition of the present invention. The preferable region can include acid dyes and direct dyes as described later.

The ink composition of the present invention has an object of textile printing in full color, and it is possible to prepare ink compositions each of which has a different hue such as yellow, orange, brown, red, violet, blue, green and black and to use them in combination for an ink set. When ink compositions of the present invention are used for an ink set, the dyes contained in the ink compositions for different hues are not necessarily selected from the same region in the above-described regions. For example, a plurality of ink compositions which independently contain a dye in a different region may be also used in combination for an ink set, for example, yellow ink composition containing an acid dye, blue ink composition containing a direct dye or a reactive dye, and the like.

As described above, the region of the dye contained in the ink composition of the present invention is not particularly limited, but acid dyes or direct dyes are preferable and acid dyes are more preferable in terms of dyeing properties of dye.

Specific examples of the acid dye used in the ink composition of the present invention include, for example:
Yellow dyes such as C.I.Acid Yellow 1, 3, 11, 17, 18, 19, 23, 25, 36, 38, 40, 40:1, 42, 44, 49, 59, 59:1, 61, 65, 72, 73, 79, 99, 104, 110, 159, 169, 176, 184, 193, 200, 204, 207, 215, 219, 219:1, 220, 230, 232, 235, 241, 242 and 246;
Orange dyes such as C.I. Acid Orange 3, 7, 8, 10, 19, 24, 51, 56, 67, 74, 80, 86, 87, 88, 89, 94, 95, 107, 108, 116, 122, 127, 140, 142, 144, 149, 152, 156, 162, 166 and 168;
Brown dyes such as C.I.Acid Brown 2, 4, 13, 14, 19, 28, 44, 123, 224, 226, 227, 248, 282, 283, 289, 294, 297, 298, 301, 355, 357 and 413;
Red dyes such as C.I.Acid Red 1, 6, 8, 9, 13, 18, 27, 35, 37, 52, 54, 57, 73, 82, 88, 97, 97:1, 106, 111, 114, 118, 119, 127, 131, 138, 143, 145, 151, 183, 195, 198, 211, 215, 217, 225, 226, 249, 251, 254, 256, 257, 260, 261., 265, 266, 274, 276, 277, 289, 296, 299, 315, 318, 336, 337, 357, 359, 361, 362, 364, 366, 399, 407 and 415;
Violet dyes such as C.I.Acid Violet 17, 19, 21, 42, 43, 47, 48, 49, 54, 66, 78, 90, 97, 102, 109 and 126;
Blue dye such as C.I.Acid Blue 1, 7, 9, 15, 23, 25, 40, 61:1, 62, 72, 74, 80, 83, 90, 92, 103, 104, 112, 113, 114, 120, 127, 127:1, 128, 129, 138, 140, 142, 156, 158, 171, 182, 185, 193, 199, 201, 203, 204, 205, 207, 209, 220, 221, 224, 225, 229, 230, 239, 249, 258, 260, 264, 277:1, 278, 279, 280, 284, 290, 296, 298, 300, 317, 324, 333, 335, 338, 342 and 350;
Green dyes such as C.I.Acid Green 9, 12, 16, 19, 20, 25, 27, 28, 40, 43, 56, 73, 81, 84, 104, 108 and 109;
Black dyes such as C.I.Acid Black 1, 2, 3, 24, 24:1, 26, 31, 50, 52, 52:1, 58, 60, 63, 107, 109, 112, 119, 132, 140, 155, 172, 187, 188, 194, 207 and 222;
and the like.

Specific examples of the direct dye contained the ink composition of the present invention include, for example, blue dyes such as C.I.Direct Blue 86, 87 and 199; and the like.

Specific examples of the reactive dye used in the ink composition of the present invention include, for example:
Yellow dyes such as C.I.Reactive Yellow 2, 3, 18, 81, 84, 85, 95, 99 and 102;
Orange dyes such as C.I.Reactive Orange 5, 9, 12, 13, 35, 45 and 99;
Brown dyes such as C.I.Reactive Brown 2, 8, 9, 17 and 33;
Red dyes such as C.I.Reactive Red 3, 3:1, 4, 13, 24, 29, 31, 33, 125, 151, 206, 218, 226 and 245;
Violet dyes such as C.I.Reactive Violet 1 and 24;
Blue dye such as C.I.Reactive Blue 2, 5, 10, 13, 14, 15, 15:1, 49, 63, 71, 72, 75, 162 and 176;
Green dyes such as C.I.Reactive Green 5, 8 and 19;
Black dyes such as C.I.Reactive Black 1, 8, 23 and 39;
and the like.

The above-described dyes can be used for a black dye by mixing an orange dye, an brown dye and a red dye with a blue dye as the main dye to give a mixed dye. In addition, a black dye consisting of said mixed dyes may further contain another dye for the purpose of adjusting the color tone.

Further, in order to adjust a delicate hue, a plurality of dyes may be mixed even for an ink composition having a hue other than black hue, in some cases.

Thus, the kinds of dyes contained in the ink composition of the present invention also depend on the hue and the like in said ink composition and it is difficult to generally specify the kinds, but usually 1 to 7, preferably 1 to 5 and more preferably 1 to 3 kinds only as a guide.

The above-described dye can be used in a form such as dried powder or block or wet cake. Commercially available dyes are in various grades such as powder for industrial dyeing and liquid for textile printing and inkjet textile printing, and their production methods and purities are respectively different. Generally, in synthesis of dye, inorganic salts such as sodium chloride often come to be mixed into the dye. For the ink composition of the present invention, it is preferable to use a dye with less impurities, in order to improve storage stability and reduce adverse effects from the inkjet printer on discharge accuracy.

The total content of the dye contained as a coloring matter in the ink composition of the present invention is usually 0.5 to 35% by mass, preferably or to 20% by mass, more preferably 1 to 15% by mass and further preferably 1 to 10% by mass based on the total amount of the ink composition.

The compound represented by the above formula (1) is a compound having an average molecular weight of 340 to 2200; X₁, X₂, X₃ and X₄ each independently represent a hydrogen atom or a methyl group; each of j, k, m and n represents a number, the sum of which is 4 or more and 40 or less.

X₁ to X₄ may be the same or different, but preferably the same. Specifically, it is preferable that all of X₁ to X₄ are hydrogen atoms or all of X₁ to X₄ are methyl groups. In addition, it is particularly preferable that all of X₁ to X₄ are methyl groups.

The compound represented by the above formula (1) is a compound obtained by addition polymerization of diglycerine with propylene oxide or ethylene oxide, and k, j, m and n are average values of the degree of addition polymerization.

The above-described average molecular weight is preferably about 380 to 2000 and more preferably about 380 to 1600.

When the compound represented by the above formula (1) is a compound obtained by addition polymerization of propylene oxide, specifically a compound of the above formula (1) wherein any of X₁ to X₄ represents a methyl groups, the sum of k, j, m and n is preferably about 4 or more and 24 or less. Each value of k, j, m and n is an average value and it is difficult to specify these values, but it is preferable that k, j, m and n are almost same values. Specifically, it is preferred that any of k, j, m and n is in the range of about 1 to about 6. When all of X₁ to X₄ in the above formula (1) are methyl groups, the average molecular weight of the compound represented by the above formula (1) is usually about 340 to about 2200, preferably about 380 to about 2000, more preferably about 380 to about 1600 and further preferably about 400 to about 1600. In addition, in some cases, it is most preferably about 380 to 1400.

The compound represented by the above formula (1) is a compound obtained by addition polymerization of ethylene oxide, specifically a compound represented by the above formula (1) wherein any of X₁ to X₄ represents a hydrogen atom, it is preferable that the sum of k, j, m and n is about 6 or more and 40 or less. It is preferable that k, j, m and n are almost same values as well as described above. Specifically, it is preferred that any of k, j, m and n is in the range of about 1.5 to about 10 as an average value. When all of X₁ to X₄ in the above formula (1) are hydrogen atoms, the average molecular weight of the compound represented by the above formula (1) is usually about 390 to about 2200, preferably about 430 to about 2200 and more preferably about 450 to about 2000. In addition, it is most preferably about 400 to 1600 in some cases.

The compound represented by the above formula (1) used in the present invention is generally known as polyoxy propylene diglyceryl ether or polyoxyethylene diglyceryl ether, and also available from the market. Specific examples of its commercial products include, for example, polyoxy propylene diglyceryl ethers such as SC-P400 [a compound of the above formula (1) wherein k + j + m + n = 4, having an average molecular weight of 400], SC-P750 [likewise, a compound wherein k + j + m + n = 9, having an average molecular weight of 750], SC-P1000 [likewise, a compound wherein k + j + m + n = 14, having an average molecular weight of 1000], SC-P1200 [likewise, a compound wherein k + j + m + n = 18, having an average molecular weight of 1200] and SC-P1600 [likewise, a compound wherein k + j + m + n = 24, having an average molecular weight of 1600]; polyoxyethylene diglyceryl ethers such as SC-E450 [a compound of the above formula (1) wherein k + j + m + n = 6, having an average molecular weight of 450], SC-E750 [likewise, a compound wherein k + j + m + n = 13, having an average molecular weight of 750], SC-E1000 [likewise, a compound wherein k + j + m + n = 20, having an average molecular weight of 1000], SC-E1500[likewise, a compound wherein k + j + m + n = 30, having an average molecular weight of 1500] and SC-E2000 [likewise, a compound wherein k + j + m + n = 40, having an average molecular weight of 2000]; and the like, which are aii trade names and manufactured by Sakamoto Yakuhin Kogyo Co., Ltd.

Among these specific examples, compounds having an average molecular weight of about 340 to 2200 and preferably 400 to 2000 are preferred. In this regard, said average molecular weight can be measured by GPC (gel penetration chromatography).

The compound represented by the above formula (1) is used for the purpose of adjusting the viscosity of the ink composition of the present invention. Said compound serves to appropriately adjust the viscosity of said ink composition to a value in the range suitable for industrial inkjet heads, particularly to adjust it toward high viscosity. And then, coordination with other components used in the present invention achieves the required performances such as discharge responsiveness at high-speed (high frequency responsiveness) and good discharge after being left to stand.

The content of the compound represented by the above formula (1) is usually 5 to 50% by mass, preferably 5 to 40% by mass, more preferably 5 to 30% by mass and further preferably 5 to 25% by mass based on the total amount of the ink composition of the present invention.

In addition, it is also very preferable that the content of the compound represented by the above formula (1) is 10 to 30% by mass based on the total amount of the ink composition of the present invention. Further preferable is 15 to 30% by mass. In particular, when the molecular weight of the compound of the above formula (1) is about 380 to 1600 and more preferably about 380 to 1400, the content of the compound of the above formula (1) is the most preferable.

The ink composition of the present invention contains ethylene glycol as a water-soluble organic solvent. Ethylene glycol has functions of viscosity-adjusting, dry-preventing, clog-preventing at a nozzie of the inkjet head, and the like. In the ink composition of the present invention, containing ethylene glycol together with the compound of the above formula (1) and, more preferably, further containing another water-soluble organic solvent achieve good discharge stability at the inkjet head, which cannot be achieved by the compound of the above formula (1) alone. In particular, good discharge after being left to stand and good frequency responsiveness at all frequencies in low frequency to high frequency driving are achieved. In addition, there are effects such that generation of solids by drying an ink composition is prevented and clogging does not occur at a nozzle.

The content of ethylene glycol is usually 5 to 35% by mass, preferably 7 to 35% by mass, more preferably 10 to 35% by mass and further preferably 10 to 30% by mass based on the total amount of the ink composition of the present invention. Further in some cases, most preferable is 7 to 30% by mass.

The viscosity of the water-based ink composition of the present invention at 25°C is, when measured by E-type viscometer, usually about 3 to 20 mPa·s, preferably about 8 to 20 mPa·s and further preferably about 12 to 18 mPa·s.

The water-based ink composition of the present invention is adjusted in the above-described viscosity range so that the effects of the present invention substantially are exerted. Specifically, according to a preferable composition, very good results can be obtained in all the terms of usual discharge properties, discharge after being left to stand and frequency responsiveness (in particular, high frequency responsiveness).

The surface tension in this case is preferably in the range of usually 20 to 40 mN/m when measured by the plate method. More specifically, it is preferred to finely adjust it to an appropriate physical property value in view of the discharge rate, the response speed, the flight characteristics of ink droplets, the properties inherent in the inkjet head, and the like in a printer used.

The ink composition of the present invention is a composition in which the above dye, a compound represented by the above formula (1) and ethylene glycol are contained and the rest is water.

The water used in preparation of said ink is usually preferably purified water.

Non-purified water and the like contain a metal ion such as calcium ion and magnesium ion, so when such water is used in preparation of the ink composition, said metal ion and the like, even in a trace amount, come to be mixed with the ink composition. Therefore, water with less inorganic impurities, for example, distilled water or ion-exchanged water is preferably used to prepare the ink composition of the present invention.

Hereinafter, in the present description, an inorganic salt mixed in the above dye and a metal ion from water used for the above-described ink preparation are together referred to as "inorganic impurities" for convenience.

These inorganic impurities not only significantly impair the solubility of the water-based ink solvent in the dye and the storage stability of the water-based ink composition but also cause corrosion, abrasion and nozzle clogging of the inkjet printer head. Therefore, it is desirable that the inorganic impurities contained in the ink composition are removed off as much as possible by using a known method such as ultrafiltration, reverse osmosis membrane or ion exchange. The amount of the inorganic impurities contained in the total amount of the ink composition is usually 1% by mass or less, preferably 0.1% by mass or less and more preferably 0.01% by mass or less. The lower limit is the detection limit or less of a detection apparatus, specifically it may be 0%. In addition, after the inorganic impurities are removed off, it is preferred to adjust to a desired dye concentration by dilution or condensation to obtain the ink composition.

Other components which may be further contained together with the above-described components in the ink composition of the present invention include a water-soluble organic solvent other than ethylene glycol, an ink preparation agent and the like. Using a water-soluble organic solvent other than ethylene glycol in combination is preferable in order to more likely achieve good discharge after being left to stand, good frequency responsiveness at all frequencies and the like, as described above.

The preferable water-soluble organic solvent other than ethylene glycol can include polyhydric alcohols, pyrrolidones and the like.

The polyhydric alcohols include, for example, C2-C6 preferably C3-C6 polyhydric alcohol having 2 or 3 alcoholic hydroxy groups other than ethylene glycol, and poly C2-C3, preferably liquid poly C2-C3 alkylene glycol having 4 or more repeating units and a molecular weight of about 20,000 or less, and the like. Specific examples of the polyhydric alcohols include C2-C6 polyhydric alcohols having 2 or 3 alcoholic hydroxy groups, such as glycerine, 1,3-pentanediol and 1,5-pentanediol; di- or tri-C2-C3 alkylene glycols such as diethylene glycol, triethylene glycol and propylene glycol; poly C2-C3 alkylene glycols such as polyethylene glycol and polypropylene glycol; and the like.

Among them, C3-C6 polyhydric alcohol having 2 or 3 and preferably 3 alcoholic hydroxy groups is preferable, and glycerine is more preferable.

The pyrrolidones includes 2-pyrrolidone, N-methyl-2-pyrrolidone and the like.

In the case of using a water-soluble organic solvent other than ethylene glycol, said water-soluble organic solvents may be used alone or in combination, but they are preferably used in combination.

The water-soluble organic solvent preferably used in combination can include polyhydric alcohols other than ethylene glycol and more preferably glycerine, or/and pyrrolidones and preferably 2-pyrrolidone. The combination use of the pyrrolidones contributes to improvement of solubility and storage stability of dye.

The content of water-soluble organic solvents other than the above-described ethylene glycol is, in total, usually 1 to 40% by mass, preferably 3 to 30% by mass, more preferably 5 to 20% by mass and further preferably 8 to 20% by mass, based on the total amount of the ink composition.

In the case of using a polyhydric alcohol other than ethylene glycol in combination, it can be used in the above-described range based on the total amount of the ink composition and it is preferably about 5 to 15% by mass.

In addition, in the case of using a pyrrolidones in combination, it can be used in the above-described range based on the total amount of the ink composition and it is preferably about 0.5 to 5% by mass.

In the most preferable aspect of the water-based ink composition of the present invention, a polyhydric alcohol other than ethylene glycol, preferably glycerine and a pyrrolidones, preferably 2-pyrrolidone are used in combination.

The ink preparation agent includes a surfactant, an antiseptic and fungicide, a pH adjuster and the like. The content of ink preparation agents is, in total, usually about 0 to 10% by mass and preferably about 0.05 to 5% by mass based on the total amount of the ink composition.

The surfactant includes anionic surfactants, cationic surfactants, amphoteric surfactants and nonionic surfactants.

The anionic surfactants include alkylsulfocarboxylate, alpha-olefin sulfonate, polyoxyethylene alkyl ether acetate, N-acylamino acid or a salt thereof, N-acylmethyltaurine salt, alkylsulfate polyoxyalkyl ether sulfate, alkylsulfate polyoxyethylene alkyl ether phosphate, rosin acid soap, castor oil sulfate, lauryl alcohol sulfate, alkylphenol-type phosphate ester, alkyl-type phosphate ester, alkylaryl sulfonate, diethyl sulfosuccinate, diethylhexyl sulfosuccinate, dioctyl sulfosuccinate and the like.

The cationic surfactants include 2-vinylpyridine derivatives, poly(4-vinylpyridine) derivatives and the like.

The amphoteric surfactants include lauryldimethylaminoacetic acid betaine, 2-alkyl-N-carboxymethyl-N-hydroxyethyl imidazolinium betaine, coconut oil fatty acid amide propyldimethylaminoacetic acid betaine, polyoctylpolyaminoethylglycine, imidazoline derivatives and the like.

The nonionic surfactants include ether-types such as polyoxyethylene nonylphenyl ether, polyoxyethylene octylphenyl ether, polyoxyethylene dodecylphenyl ether, polyoxyethylene octylphenyl ether, polyoxyethylene oleyl ether, polyoxyethylene lauryl ether and polyoxyethylene alkyl ether; ester-types such as polyoxyethylene oleate ester, polyoxyethylene distearate ester, sorbitan laurate, sorbitan monostearate, sorbitan monooleate, sorbitan sesquioleate, polyoxyethylene monooleate and polyoxyethylene stearate; acetylene glycols (alcohols)-types such as 2,4,7,9-tetramethyl-5-decyne-4,7-diol, 3,6-dimethyl-4-octyne-3,6-diol, 3,5-dimethyl-1-hexyn-3-ol and acetylene glycol alkylene oxide adducts; and the like. In the water-based ink composition of the present invention, acetylene glycol C2-C3 alkylene oxide adducts are preferable. These surfactants can be available as a commercial product. It includes, for example, Surfynol^{RTM} 104, 82,440,420 and 465 and Olfine^{RTM} STG, which are trade names and manufactured by Nissin Chemical Industry Co., Ltd.; and the like.

Preferable are surfactants of Surfynol^{RTM} series and more preferable is Surfynol^{RTM} 440.

In this regard, superscript RTM in the present description represents a registered trademark.

The antiseptic and fungicide includes, for example, amine salts of sodium dehydroacetate, sodium benzoate, sodium pyridinethion-1-oxide, zinc pyridinethion-1-oxide, 1,2-benzisothiazolin-3-one and 1-benzisothiazolin-3-one, and Proxel^{RTM} GXL and the like manufactured by Arch Chemicals,Inc., and preferably Proxel^{RTM} GXL.

The pH adjuster includes, for example, alkali earth metal hydroxides such as sodium hydroxide, potassium hydroxide and lithium hydroxide; tertiary amines such as triethanolamine, diethanolamine, dimethyl ethanol amine and diethyl ethanol amine and preferably tri C1-C4 alkylamine which may be substituted by a hydroxy group; and the like. Among them, tertiary C1-C3 alkanolamine is preferable and triethanolamine is particularly preferably in terms of storage stability and the like.

The content of the pH adjuster can be any amount as long as it can adjust the pH of the water-based ink composition of the present invention to the range of 7 to 10 and preferably 7 to 9.5, and it is usually about 0.1 to 2% by mass based on the total amount of the water-based ink composition.

Preferable ink compositions of the present invention are specifically as described below:
(i) A water-based ink composition which contains at least one kind of dye selected from the group consisting of acid dyes, direct dyes and reactive dyes, a compound having an average molecular weight of 340 to 2200 represented by the above formula (1) (hereinafter, which is referred to as compound of the formula (1)), ethylene glycol and water, and has a viscosity at 25°C in the range of 8 to 20 mPa·s.
(ii) The water-based ink composition according to the above-described (i), wherein the dye is at least one dye selected from acid dyes and direct dyes and preferably an acid dye.
(iii) The water-based ink composition according to the above-described (i) or (ii), wherein the content of the dye is 1 to 15% by mass, the compound of the formula (1) is 5 to 30% by mass and ethylene glycol is 1 to 40% by mass, based on the total amount of the water-based ink composition, and the rest is water.
(iv) The water-based ink composition according to any one of the above-described (i) to (iii), wherein the content of water is 30 to 50% by mass based on the total amount of the water-based ink composition.
(v) The water-based ink composition according to any one of the above-described (i) to (iv), wherein the content of the compound of the above formula (1) is 10 to 30% by mass based on the total amount of the water-based ink composition.
(vi) The water-based ink composition according to any one of the above-described (i) to (v), wherein the average molecular weight of the compound of the above formula (1) is about 380 to 2000.
(vii) The water-based ink composition according to any one of the above-described (i) to (vi),wherein the average molecular weight of the compound of the above formula (1) wherein X₁ to X₄ are methyl groups is about 380 to 1400, or the average molecular weight of the compound of the above formula (1) wherein X₁ to X₄ are hydrogen atoms is about 400 to 1600, and the content of the compound is 15 to 30% by mass based on the total amount of the water-based ink composition.
(viii) The water-based ink composition according to any one of the above-described (i) to (vii), which further contains a water-soluble organic solvent other than ethylene glycol in an amount of 3 to 30% by mass based on the total amount of the water-based ink composition.
(ix) The water-based ink composition according to the above-described (viii), which contains at least either a polyhydric alcohol or a pyrrolidones as said water-soluble organic solvent.
(x) The water-based ink composition according to the above-described (ix), which contains both a polyhydric alcohol and a pyrrolidones as said water-soluble organic solvent, the contents thereof being respectively 5 to 15% by mass and 0.5 to 5% by mass based on the total amount of the water-based ink composition.
(xi) The water-based ink composition according to any one of the above-described (i) to (x), which has a pH of 7 to 10 and contains tertiary C1-C3 alkanolamine as a pH adjuster.
(xii) The water-based ink composition according to any one of the above-described (i) to (xi), which contains a nonionic surfactant.
(xiii) The water-based ink composition according to the above-described (xii), wherein the nonionic surfactant is an acetylene glycol · C2-C3 alkylene oxide adduct.

The water-based ink composition of the present invention is obtained by adding the above dye, a compound represented by the above formula (1) and ethylene glycol to water and, according to necessity, further adding the above water-soluble organic solvent other than ethylene glycol and an ink preparation agent, followed by stirring and mixing until the solid content of the dye and the like are dissolved. The obtained water-based ink composition of the present invention is in a solution state, and unlike a water-based ink composition containing a water-insoluble coloring matter, it contains no dispersed solid matter.

The order of adding the above-described components is not particularly limited, and they may be mixed by stirring to give a substantial solution for preparation of the water-based ink composition of the present invention. Water used in preparation of said ink composition is preferably water with less inorganic impurities as described above, for example, distilled water, ion-exchanged water and the like.

In this regard, in the case of using the ink composition of the present invention for inkjet textile printing, it is preferable that the ink composition of the present invention is microfiltered using a membrane filter or the like and the filtrate with foreign substances removed off is used as an ink. The pore size of the filter used for microfiltration is usually 1 µm to 0.1 µm and preferably 0.8 µm to 0.1 µm.

The method for producing dyed polyamide fibers of the present invention is a method where polyamide fibers are dyed by inkjet textile printing to produce dyed polyamide fibers.

The method of dyeing polyamide fibers by inkjet textile printing can be usually carried out as described below.

For example, polyamide fibers can be textile-printed by adhering, to polyamide fibers by inkjet, the water-based ink composition of the present invention, preferably said water-based ink composition with foreign substances removed off by filtration using a membrane filter and the like, followed by fixing the dye to the polyamide fibers.

The ink nozzle used then is not particularly limited as long as it is an ink nozzle used for industrial inkjet heads, and can be appropriately selected according to the purpose.

The form of the polyamide fiber to be dyed is preferably fiber processed into usually a fabric consisting of polyamide fiber, a fabric where the main component is polyamide fiber, or the like.

Said polyamide fiber includes, for example, natural fibers such as silk and wool, synthesized polyamide fibers such as nylon, blended fibers containing any of these, and the like.

The method for textile printing polyamide fibers using the ink composition of the present invention includes a method where the following 3 steps are sequentially carried out:

### [Step 1]

A step where the ink composition of the present invention is applied to polyamide fibers by using an inkjet printer.

### [Step 2]

A step where the dye in the ink composition applied in step 1 is fixed to the above-described polyamide fibers by heat.

### [Step 3]

A step where the unfixed dye remaining in the above-described polyamide fibers is washed off.

In the method of applying the ink composition of the present invention in the above-described step 1 (which is referred to as "ink" simply in the following explanation) to polyamide fibers by using an inkjet printer, a container filled with the ink composition of the present invention (ink) is loaded in a predetermined position of an inkjet printer and ink droplets of said ink are discharged responding to a recording signal to be fixed to polyamide fibers.

The step where the dye of the ink composition in the above-described step 2 is fixed to polyamide fibers by heat includes a method where the polyamide fibers applied with the ink composition of the present invention are left to stand at an ordinary temperature to 150°C for 0.5 to 30 minutes for pre-drying, and then further subjected to steaming treatment; and the like. With regard to the conditions of steaming treatment, said fibers is preferably treated in an environment of a humidity of 80 to 100% and a temperature of 95 to 105°C for 5 to 40 minutes.

In the step of washing the unfixed dye remaining in the polyamide fibers in the above-described step 3, it is preferable to wash said polyamide fibers with cold water. In washing, said cold water may contain a surfactant.

By drying the polyamide fibers at 50 to 120°C for 5 to 30 minutes after washing the unfixed dye, an intended textile-printed matter (dyed polyamide fibers) can be obtained.

For the method of textile-printing polyamide fibers, the polyamide fibers are preferably pretreated before the above-described 3 step is carried out, specifically before the ink composition is applied (which is referred to as pretreatment). This pretreatment includes a treatment where the polyamide fibers are impregnated with an aqueous solution containing both one or more kinds of sizing agents and a pH adjuster before the ink composition is applied, to apply said sizing agent and the pH adjuster to the polyamide fibers.

This pretreatment step is not essential but imparts an effect of preventing dye bleeding in textile printing in some cases, and therefore the textile printing method of the present invention is preferably a textile printing method where 4 steps comprising the above-described pretreatment step are sequentially carried out.

In the above-described pretreatment step, it is preferable that the polyamide fibers are impregnated with, as a pretreatment liquid, an aqueous solution containing both one or more kinds of sizing agents and a pH adjuster in order to apply the both described above to the polyamide fibers. In addition, it is preferable that this pretreatment liquid further contains a hydrotropic agent.

The method of applying the above-described pretreatment agents (one or more kinds of sizing agents, a pH adjuster and a hydrotropic agent) to the polyamide fibers includes, for example, padding method. The drawing rate of padding at this time is preferably about 40 to 90% and more preferably about 60 to 80%.

The sizing agent used in the pretreatment step includes gums, for example, natural gums such as guar gum and locust bean or processed natural gums such as shiratsu gum-type and roast bean gum-type; starches; seaweeds such as sodium alginate and glue plant; plant skins such as pectic acid; cellulose derivatives such as methyl cellulose, ethyl cellulose, hydroxyethyl cellulose and carboxymethyl cellulose; processed starches such as carboxymethyl starch; synthetic pastes such as polyvinyl alcohol and polyacrylic acid ester; and the like. It can preferably include gums, specifically natural gums such as guar gum and locust bean and processed natural gums such as shiratsu gum-type and roast bean gum-type, more preferably natural gums and most preferably guar gum.

The pH adjuster used in the pretreatment step is preferably one showing acidity in aqueous solution and can include specifically acidic ammonium salts such as ammonium sulfate, ammonium tartrate and ammonium acetate. Among them, preferable is ammonium sulfate.

The hydrotropic agent used in the pretreatment step includes urea; thio urea; alkyl-substituted urea or thio urea, such as dimethyl urea, mono methylthio urea and dimethylthio urea; and the like. Among them, preferable is urea.

These pretreatment agents may be each used alone or in combination with 2 kinds or more thereof, but preferably used in combination.

The mixture ratio of the sizing agent and the pH adjuster in the above pretreatment liquid varies, for example, according to the blend ratio in the polyamide fiber and the like so it is difficult to specify, but only as a guide, the sizing agent is 0.5 to 5% and the pH adjuster is 0.5 to 5%, respectively based on mass of the total amount of said pretreatment liquid; and the rest is water. When the hydrotropic agent is further mixed, it is preferred to add 1 to 20% by mass thereof based on the total amount of said pretreatment liquid.

The water-based ink composition of the present invention is suitable for printers equipped with an industrial inkjet head requiring an high viscosity ink, shows good frequency responsiveness in driving at any of low frequency to high frequency, and exerts good discharge performance. In addition, it has extremely good discharge stability after being left to stand. Further, the ink composition of the present invention is free from precipitation, separation and the like even after storage for a long period of time and thus excellent in storage stability, and furthermore, in the polyamide fibers textile-printed with said ink composition, the fixation rate of the dye is high. Therefore, the ink composition of the present invention and the method for producing dyed polyamide fibers by using this are extremely suitable for obtaining dyed polyamide fibers by inkjet textile printing.

### Examples

Hereinafter, the present invention will be more specifically explained with reference to the Examples, but the present invention is not limited by these Examples. Unless otherwise noted in the Examples, "part(s)" means "part(s) by mass" and "%" means "% by mass", respectively.

In any of the Examples, as a compound represented by the above formula (1) of the present invention, a compound from two series of "SC-P" and "SC-E" is used which are commercial products available from Sakamoto Yakuhin Kogyo Co., Ltd. Among them, any of the compounds from "SC-P" is polyoxypropylene diglyceryl ether and any of the compounds from "SC-E" is polyoxyethylene diglyceryl ether.

### [Table 1]

Trade name and average molecular weight of each compound in Examples:
1) SC-P400: Average molecular weight of 400
2) SC-P1000: Average molecular weight of 1000
3) SC-P1200: Average molecular weight of 1200
4) SC-P1600: Average molecular weight of 1600
5) SC-E450: Average molecular weight of 450
6) SC-E1000: Average molecular weight of 1000
7) SC-E1500: Average molecular weight of 1500
8) SC-E2000: Average molecular weight of 2000

In addition, "polyglycerine 750" used in Example 10 and Comparative Example 2 is polyglycerine manufactured by Sakamoto Yakuhin Kogyo Co., Ltd. and having an average molecular weight of 750.

### [Examples 1 to 10]

By mixing the components described in each Example described below and stirring for about 1 hour until a solid content is dissolved, each ink composition was obtained. After then, by filtrating using a 0.45 µm membrane filter (trade name: cellulose acetate-type filtration paper, manufactured by Advantec Toyo Kaisha, Ltd.), each ink for testing was prepared. The ink preparations are Examples 1 to 10, respectively.

In this regard, each dye used in each ink as a coloring matter is manufactured by Nippon Kayaku Co., Ltd.. The words "Acid", "Direct" and "Reactive" described immediately after "C.I." in said each dye mean "acid dye", "direct dye" and "reactive dye" respectively as known.

Any of the ink compositions obtained in Examples described below had a pH of 7 to 10 and good storage stability, and when it was stored at 60°C, it was free from change in physical properties, precipitate or the like even after 2 weeks. In particular, Examples 1 to 3 and Examples 5 to 7 were free from change in physical properties, precipitate and the like after another month.

### [Example 1 (yellow ink)]

| | |
|---|---|
| C.I. Acid Yellow 110 | 5 parts |
| Triethanolamine | 0.5 part |
| SC-P400 | 25 parts |
| Ethylene glycol | 15 parts |
| 2-Pyrrolidone | 2 parts |
| Glycerine | 10 parts |
| Surfynol^{RTM} 440 | 0.1 part |
| Proxel^{RTM} GXL | 0.1 part |
| Ion-exchanged water | 42.3 parts |

### [Example 2 (magenta ink)]

| | |
|---|---|
| C.I. Acid Red 131 | 5 parts |
| Triethanolamine | 0.5 part |
| SC-P1000 | 25 parts |
| Ethylene glycol | 10 parts |
| 2-Pyrrolidone | 2 parts |
| Glycerine | 10 parts |
| Surfynol^{RTM} 440 | 0.1 part |
| Proxel^{RTM} GXL | 0.1 part |
| Ion-exchanged water | 47.3 parts |

### [Example 3 (cyan ink)]

| | |
|---|---|
| C.I. Acid Blue 185 | 5 parts |
| Triethanolamine | 0.5 part |
| SC-P1200 | 25 parts |
| Ethylene glycol | 15 parts |
| 2-Pyrrolidone | 2 parts |
| Glycerine | 10 parts |
| Surfynol^{RTM} 440 | 0.1 part |
| Proxel^{RTM} GXL | 0.1 part |
| Ion-exchanged water | 42.3 parts |

### [Example 4 (black ink)]

| | |
|---|---|
| C.I. Acid Black 52 | 5 parts |
| Triethanolamine | 0.5 part |
| SC-P1600 | 10 parts |
| Ethylene glycol | 30 parts |
| 2-Pyrrolidone | 2 parts |
| Glycerine | 10 parts |
| Surfynol^{RTM} 440 | 0.1 part |
| Proxel^{RTM} GXL | 0.1 part |
| Ion-exchanged water | 42.3 parts |

### [Example 5 (magenta ink)]

| | |
|---|---|
| C.I. Acid Red 249 | 5 parts |
| Triethanolamine | 0.5 part |
| SC-E450 | 25 parts |
| Ethylene glycol | 20 parts |
| 2-Pyrrolidone | 2 parts |
| Glycerine | 8 parts |
| Surfynol^{RTM} 440 | 0.1 part |
| Proxel^{RTM} GXL | 0.1 part |
| Ion-exchanged water | 39.3 parts |

### [Example 6 (cyan ink)]

| | |
|---|---|
| C.I. Direct Blue 199 | 5 parts |
| Triethanolamine | 0.5 part |
| SC-E1000 | 25 parts |
| Ethylene glycol | 10 parts |
| 2-Pyrrolidone | 3 parts |
| Glycerine | 10 parts |
| Surfynol^{RTM} 440 | 0.1 part |
| Proxel^{RTM} GXL | 0.1 part |
| Ion-exchanged water | 46.3 parts |

### [Example 7 (cyan ink)]

| | |
|---|---|
| C.I. Direct Blue 87 | 5 parts |
| Triethanolamine | 0.5 part |
| SC-E1500 | 25 parts |
| Ethylene glycol | 10 parts |
| 2-Pyrrolidone | 3 parts |
| Glycerine | 10 parts |
| Surfynol^{RTM} 440 | 0.1 part |
| Proxel^{RTM} GXL | 0.1 part |
| Ion-exchanged water | 46.3 parts |

### [Example 8 (cyan ink)]

| | |
|---|---|
| C.I. Reactive Blue 15:1 | 5 parts |
| Triethanolamine | 0.5 part |
| SC-E2000 | 25 parts |
| Ethylene glycol | 10 parts |
| 2-Pyrrolidone | 3 parts |
| Glycerine | 10 parts |
| Surfynol^{RTM} 440 | 0.1 part |
| Proxel^{RTM} GXL | 0.1 part |
| Ion-exchanged water | 46.3 parts |

### [Example 9 (orange ink)]

| | |
|---|---|
| C.I. Acid Orange 95 | 5 parts |
| Triethanolamine | 0.5 part |
| SC-E2000 | 15 parts |
| Ethylene glycol | 25 parts |
| 2-Pyrrolidone | 2 parts |
| Glycerine | 10 parts |
| Surfynol^{RTM} 440 | 0.1 part |
| Proxel^{RTM} GXL | 0.1 part |
| Ion-exchanged water | 42.3 parts |

### [Example 10 (orange ink)]

| | |
|---|---|
| C.I. Acid Orange 95 | 5 parts |
| Triethanolamine | 0.5 part |
| SC-E2000 | 5 parts |
| Ethylene glycol | 10 parts |
| 2-Pyrrolidone | 2 parts |
| Glycerine | 10 parts |
| Polyglycerine 750 | 20 parts |
| Surfynol^{RTM} 440 | 0.1 part |
| Proxel^{RTM} GXL | 0.1 part |
| Ion-exchanged water | 47.3 parts |

### [Comparative Examples 1 to 4]

In the same manner as in Example 2 except that each compound shown below was used instead of the compound (SC-P 1000) represented by the above formula (1), each ink for comparison was prepared. The ink preparations are Comparative Examples 1 to 4.
Comparative Example 1: Glycerine
Comparative Example 2: Polyglycerine 750
Comparative Example 3: Ethylene glycol
Comparative Example 4: Propylene glycol

### [Comparative Example 5]

In the same manner as in Example 2 except that 10 parts of propylene glycol was used instead of 10 parts of ethylene glycol, an ink for comparison was prepared. The ink preparation is Comparative Example 5.

### [Comparative Example 6]

In the same manner as in Example 2 except that 10 parts of ion-exchanged water was used instead of 10 parts of ethylene glycol, an ink for comparison was prepared. The ink preparation is Comparative Example 6.

### [Comparative Example 7]

In the same manner as in Example 2 except that 10 parts of a compound represented by the above formula (1) was used instead of 10 parts of ethylene glycol, an ink for comparison was prepared. However, it was impossible to discharge this ink by an inkjet printer, because its viscosity was too high.

### [Evaluation of Ink]

The 4 kinds of tests for the below-described (1) to (4) were conducted on each ink prepared in Examples 1 to 10 and Comparative Examples 1 to 6 as described above to evaluate for ink performance. The test results are together shown in Table 2 described below.

### (1) Viscosity test

The viscosity of each ink of Examples and Comparative Examples were measured at 25°C using an E-type viscometer. In this regard, the unit of the numerical values in Table 2 described below is mPa·s.

### (2) Discharge property test

Using, as a pretreatment liquid, an aqueous solution containing guar gum, ammonium sulfate and urea in an amount of 2% by mass, 2% by mass and 5% by mass respectively based on the total amount of the aqueous solution, silkcloth was pretreated by padding method at a drawing rate of 80%. Using each ink of Examples and Comparative Examples, said silkcloth was printed by an on-demand-type inkjet printer (trade name: Apollo 2 printer system, manufactured by FUJIFILM Dimatix, Inc.) equipped with an industrial inkjet head (trade name: NOVA, manufactured by FUJIFILM Dimatix, Inc.) to evaluate each ink discharge properties.

In this regard, evaluation for discharge properties was conducted as follows.

While being fed using a cloth feeding machine for inkjet printing (trade name: Web Transport, manufactured by iTi Corporation), a basic pattern printable in initial setting of the above-described printer was continuously printed over 2 m on roll silkcloth having a width of 7.5 cm. The condition of the obtained print image was confirmed by visual observation and the test result was evaluated by the following criteria. The evaluations ⊚ and ○ mean having practical discharge properties.
⊚: There is no variability of the landing position and good printing of the image pattern can be performed stably to the end.
○: A little variability in the landing position is observed but no iine, no insufficiency nor the like in the print image are visually observed, and good printing can be performed to the end.
Δ: There is a significant variability in the landing position, and line and/or insufficiency in the print image can be observed. Printing is unstable, but printing the image pattern can be performed to the end.
×: There is a significant variability in the landing position and there are a lot of lines and insufficiency in the print image, and also splattered ink is observed at the periphery of the print image. Printing is unstable, the image pattern is disturbed, and finally, ink cannot be discharged so printing the image pattern cannot be performed.

### (3) Evaluation test of discharge after being left to stand

After head cleaning operation by ink purge and head wipe was conducted on the printer used in the discharge property test of the above-described (2), the printer was left to stand with the head open for 10 seconds before ink discharge was started. After that, in the same manner as in the discharge property test of the above-described (2) except that a solid pattern was used instead of the print image and the printed length was shorter, printing was performed.

Of the printed image obtained, the condition of the printed image on the first printed part (10 cm part from the start of ink discharge) can be confirmed by visual observation, and the test result was evaluated under the following criteria.
○: Good printing can be also performed in the first printed part.
Δ: Disturbance, lines or insufficiency of the printed image can be slightly observed in the printed image on the first printed part.
×: There are a lot of lines or insufficiency in the printed image on the first printed part, and scattering in the printed image is significant.

### (4) Evaluation test of frequency responsiveness

Using the same inkjet head, printer and feeding machine as in the discharge property test of the above (2), while the driving frequency of the print head was changed 1 kHz by 1 kHz in the range of 1 to 20 kHz, a solid pattern was continuously printed 20 cm long on the pretreated silkcloth at each frequency. The condition of the printed image obtained was confirmed by visual observation, and the test result was evaluated under the following criteria.
○: Good printing can be performed all in the frequency range.
Δ: Discharged ink drop splattered can be confirmed at the periphery of the printed image at some frequencies.
×: A significant ink drop discharged can be confirmed in most of the printed images at all the frequencies.

**[Table 2]**

| Test result | Viscosity | Discharge property | * | ** |
|---|---|---|---|---|
| Example 1 | 13.7 | ⊚ | ○ | ○ |
| Example 2 | 13.3 | ⊚ | ○ | ○ |
| Example 3 | 14.9 | ⊚ | ○ | ○ |
| Example 4 | 8.1 | ○ | ○ | ○ |
| Example 5 | 12.8 | ⊚ | ○ | ○ |
| Example 6 | 14.0 | ⊚ | ○ | ○ |
| Example 7 | 16 .4 | ⊚ | ○ | ○ |
| Example 8 | 19.5 | ○ | ○ | ○ |
| Example 9 | 11.8 | ○ | ○ | ○ |
| Example 10 | 11.6 | ○ | ○ | ○ |
| Comparative Ex. 1 | 5.6 | × | × | × |
| Comparative Ex. 2 | 7.7 | Δ | Δ | × |
| Comparative Ex. 3 | 4.3 | × | × | × |
| Comparative Ex. 4 | 5.8 | × | × | × |
| Comparative Ex. 5 | 16.5 | ○ | × | × |
| Comparative Ex. 6 | 9.8 | Δ | × | × |

| | | | | |
|---|---|---|---|---|
| * Discharge after being left to stand ** Frequency responsiveness | | | | |

As is clear from Table 2, the viscosity of any ink of Examples and Comparative Examples is in the range of 3 to 20 mPa·s, which is usable for industrial inkjet heads. However, the viscosity of each ink of Comparative Examples 1 to 4 using a conventional viscosity modifier is 4.3 to 7.7 mPa·s, and it is found that these inks have big problems in any of discharge properties, discharge after being left to stand and frequency responsiveness. On the other hand, each ink of Examples using a compound represented by the above formula (1) as a viscosity modifier showed a higher viscosity of 8 to 20 mPa·s and had good evaluation results in all the test. From this, it is found that about 8 to 20 mPa·s are better for the viscosity of an ink used for industrial inkjet heads, and that good discharge performance is obtained regardless of the frequency value when the compound shown by the above formula (1) is used.

In addition, Comparative Example 5 using propylene glycol instead of ethylene glycol and Comparative Example 6 using ion-exchanged water instead of ethylene glycol imparted a good ink viscosity but showed significant inferior results in discharge after being left to stand and frequency responsiveness. From this, it is confirmed that good discharge performance is obtained at any frequency of low frequency to high frequency only when both the compound represented by the above formula (1) and ethylene glycol are used in combination, and that discharge after being left to stand is also extremely good.

As is clear from the above result, the ink composition of the present invention is an ink composition excellent in any of discharge stability, discharge after being left to stand and frequency responsiveness, and suitable for industrial inkjet heads.

### Example 11

### (Preparation of pretreated cloth)

A pretreatment liquid according to the composition shown in Table 3 described below was prepared. In this regard, as a guar gum, Meyprogum was used which is a trade name and manufactured by Meyhall Chemical.

**[Table 3]**

| | |
|---|---|
| Guar gum | 2 parts |
| Ammonium sulfate | 2 parts |
| Urea | 5 parts |
| Ion-exchanged water | 91 parts |

Using the above-described pretreatment liquid, silkcloth was subjected to padding treatment at a drawing rate of 80% and subsequently dried under the circumstance of 80°C for 10 minutes to obtain pretreated silkcloth.

### (Printing on silkcloth)

The ink of Example 1 was printed on said silkcloth using an on-demand-type inkjet printer (trade name: Apollo 2 printer system, manufactured by FUJIFILM Dimatix, Inc.) equipped with an industrial inkjet head (trade name: NOVA, manufactured by FUJIFILM Dimatix, Inc.).

### (Fixation treatment)

Said printed cloth was treated with a high temperature steamer under the circumstances of a temperature of 102°C and a humidity of 98% or more for 8 minutes. After that, said printed cloth was dried after the step of washing and kneading with tap water and hot water and the step of washing in boiling water for 15 minutes, and a dyed product having a vivid yellow image was obtained.

### Industrial Applicability

The ink composition of the present invention can be suitably used as an ink for inkjet textile printing of polyamide fibers, particularly for inkjet textile printing with an industrial inkjet head.

## Claims

1. A method for producing dyed polyamide fibers, comprising
a step of applying a water-based ink composition containing at least one kind of dye selected from the group consisting of acid dyes, direct dyes and reactive dyes, a compound having an average molecular weight of 340 to 2200 represented by the following formula (1), and ethylene glycol: 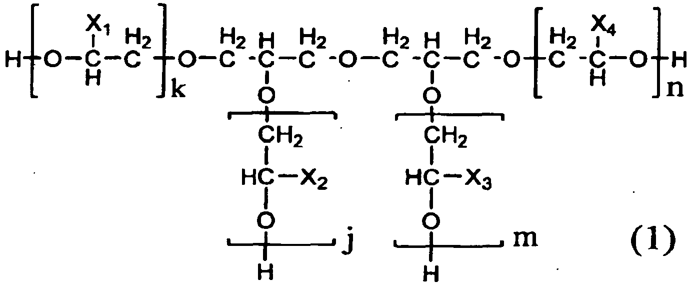 wherein X₁, X₂, X₃ and X₄ each independently represent a hydrogen atom or a methyl group; and each of j, k, m and n represents a number, the sum of which is 4 or more and 40 or less, to polyamide fibers by using an inkjet printer,
a step of fixing the dye in the water-based ink composition applied in said step to the above polyamide fibers by heat, and
a step of washing unfixed dye remaining in the above polyamide fibers.

2. The method for producing dyed polyamide fibers according to Claim 1, wherein all of X₁, X₂, X₃ and X₄ in the formula (1) are hydrogen atoms or methyl groups.

3. The method for producing dyed polyamide fibers according to Claim 1, wherein all of X₁, X₂, X₃ and X₄ in the formula (1) are methyl groups.

4. The method for producing dyed polyamide fibers according to Claim 1, wherein the content of ethylene glycol is 5 to 35% by mass based on the total amount of the water-based ink composition.

5. The method for producing dyed polyamide fibers according to Claim 1, wherein the viscosity of the water-based ink composition at 25°C is in the range of 3 to 20 mPa·s.

6. The method for producing dyed polyamide fibers according to Claim 5, wherein the viscosity of the water-based ink composition at 25°C is in the range of 8 to 20 mPa·s.

7. The method for producing dyed polyamide fibers according to Claims 1 to 6, which further comprises a step of pretreating polyamide fibers where the above polyamide fibers before applying the water-based ink composition are impregnated with an aqueous solution at least containing one or more kinds of sizing agents and a pH adjuster.

8. The method for producing dyed polyamide fibers according to Claim 1, wherein the water based ink composition further contains a water-soluble organic solvent other than ethylene glycol.

9. The method for producing dyed polyamide fibers according to Claim 8, wherein the water based ink composition contains polyhydric alcohol other than ethylene glycol as a water-soluble organic solvent.

10. The method for producing dyed polyamide fibers according to Claim 8 or 9, wherein the water based ink composition contains a pyrrolidone as a water-soluble organic solvent.

11. The method for producing dyed polyamide fibers according to Claim 9, wherein the water based ink composition contains glycerine as a water-soluble organic solvent.

12. The method for producing dyed polyamide fibers according to Claim 10, wherein the water based ink composition contains 2-pyrrolidone as a water-soluble organic solvent.

13. The method for producing dyed polyamide fibers according to Claim 9, wherein the content of a polyhydric alcohol other than ethylene glycol is 5 to 15% by mass based on the total amount of the water-based ink composition.

14. The method for producing dyed polyamide fibers according to Claim 10, wherein the content of the pyrrolidone is 0.5 to 5% by mass based on the total amount of the water-based ink composition.

15. The method for producing dyed polyamide fibers according to Claim 1, wherein the water based ink composition further contains, as a pH adjuster, tri C1-C4 alkylamine which may be substituted by a hydroxy group.

16. The method for producing dyed polyamide fibers according to Claim 1, wherein the content of water is 30 to 50% by mass based on the total amount of the water-based ink composition.

17. The method for producing dyed polyamide fibers according to Claim 1, wherein the content of the compound having a number average molecular weight of 340 to 2200 represented by the above-described formula (1) is 5 to 40% by mass based on the total amount of the water-based ink composition.

18. The method for producing dyed polyamide fibers according to Claim 1, wherein the dye is at least one dye selected from acid dyes and direct dyes.

## Patentansprüche

1. Verfahren zur Herstellung gefärbter Polyamidfasern, umfassend
einen Schritt des Auftragens einer Tinten-Zusammensetzung auf Wasserbasis, die mindestens eine Art Farbstoff, der ausgewählt wird aus der aus sauren Farbstoffen, Direktfarbstoffen und Reaktivfarbstoffen bestehenden Gruppe, eine Verbindung mit einem zahlenmittleren Molekulargewicht von 340 bis 2200, die durch die folgende Formel (1) dargestellt ist, und Ethylenglykol enthält: 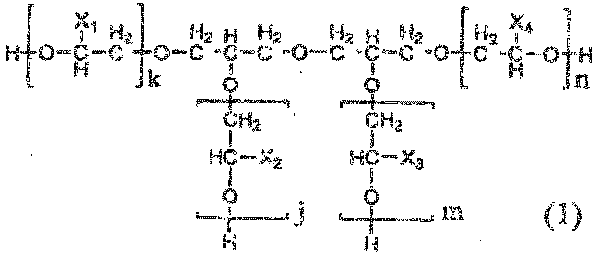 wobei X₁, X₂, X₃ und X₄ jeweils unabhängig voneinander ein Wasserstoffatom oder eine Methylgruppe darstellen; und jeder von j, k, m und n eine Zahl darstellt, deren Summe 4 oder mehr und 40 oder weniger ist, auf Polyamidfasern unter Verwendung eines Tintenstrahldruckers,
einen Schritt des Fixierens des Farbstoffes in der Tinten-Zusammensetzung auf Wasserbasis, die im obigen Schritt auf die obigen Polyamidfasern aufgetragen wurde, durch Hitze, und
einen Schritt des Waschens restlichen unfixierten Farbstoffes, der in den obigen Polyamidfasern zurückgeblieben war.

2. Verfahren zur Herstellung von gefärbten Polyamidfasern nach Anspruch 1, wobei alle von X₁, X₂, X₃ und X₄ in Formel (1) Wasserstoffatome oder Methylgruppen sind.

3. Verfahren zur Herstellung von gefärbten Polyamidfasern nach Anspruch 1, wobei alle von X₁, X₂, X₃ und X₄ in Formel (1) Methylgruppen sind.

4. Verfahren zur Herstellung von gefärbten Polyamidfasern nach Anspruch 1, wobei der Anteil an Ethylenglykol 5 bis 35 Gew.-% bezogen auf die Gesamtmenge an Tinten-Zusammensetzung auf Wasserbasis beträgt.

5. Verfahren zur Herstellung von gefärbten Polyamidfasern nach Anspruch 1, wobei die Viskosität der Tinten-Zusammensetzung auf Wasserbasis bei 25 °C im Bereich von 3 bis 20 mPa•s liegt.

6. Verfahren zur Herstellung von gefärbten Polyamidfasern nach Anspruch 5, wobei die Viskosität der Tinten-Zusammensetzung auf Wasserbasis bei 25 °C im Bereich von 8 bis 20 mPa•s liegt.

7. Verfahren zur Herstellung von gefärbten Polyamidfasern nach Anspruch 1 bis 6, welches darüber hinaus einen Schritt der Vorbehandlung von Polyamidfasern umfasst, wobei die obigen Polyamidfasern vor dem Auftragen der Tinten-Zusammensetzung auf Wasserbasis mit einer wässrigen Lösung imprägniert werden, die mindestens eine oder mehr Arten von Leimungsmitteln und ein pH-Einstellungsmittel enthält.

8. Verfahren zur Herstellung von gefärbten Polyamidfasern nach Anspruch 1, wobei die Tinten-Zusammensetzung auf Wasserbasis darüber hinaus ein von Ethylenglykol verschiedenes wasserlösliches organisches Lösungsmittel enthält.

9. Verfahren zur Herstellung von gefärbten Polyamidfasern nach Anspruch 8, wobei die Tinten-Zusammensetzung auf Wasserbasis einen von Ethylenglykol verschiedenen Polyhydroxyalkohol als wasserlösliches organisches Lösungsmittel enthält.

10. Verfahren zur Herstellung von gefärbten Polyamidfasern nach Anspruch 8 oder 9, wobei die Tinten-Zusammensetzung auf Wasserbasis Pyrrolidon als wasserlösliches organisches Lösungsmittel enthält.

11. Verfahren zur Herstellung von gefärbten Polyamidfasern nach Anspruch 9, wobei die Tinten-Zusammensetzung auf Wasserbasis Glycerin als wasserlösliches organisches Lösungsmittel enthält.

12. Verfahren zur Herstellung von gefärbten Polyamidfasern nach Anspruch 10, wobei die Tinten-Zusammensetzung auf Wasserbasis 2-Pyrrolidon als wasserlösliches organisches Lösungsmittel enthält.

13. Verfahren zur Herstellung von gefärbten Polyamidfasern nach Anspruch 9, wobei der Anteil an von Ethylenglykol verschiedenem Polyhydroxyalkohol 5 bis 15 Gew.-% bezogen auf die Gesamtmenge der Tinten-Zusammensetzung auf Wasserbasis beträgt.

14. Verfahren zur Herstellung von gefärbten Polyamidfasern nach Anspruch 10, wobei der Gehalt an Pyrrolidon 0,5 bis 5 Gew.-% bezogen auf die Gesamtmenge der Tinten-Zusammensetzung auf Wasserbasis beträgt.

15. Verfahren zur Herstellung von gefärbten Polyamidfasern nach Anspruch 1, wobei die Tinten-Zusammensetzung auf Wasserbasis darüber hinaus als pH-Einsteller Tri(C₁-C₄)alkylamin enthält, das durch eine Hydroxygruppe substituiert sein kann.

16. Verfahren zur Herstellung von gefärbten Polyamidfasern nach Anspruch 1, wobei der Gehalt an Wasser 30 bis 50 Gew.-% bezogen auf die Gesamtmenge der Tinten-Zusammensetzung auf Wasserbasis ist.

17. Verfahren zur Herstellung von gefärbten Polyamidfasern nach Anspruch 1, wobei der Anteil der Verbindung mit einem zahlenmittleren Molekulargewicht von 340 bis 2200, die durch die oben beschriebene Formel (1) dargestellt wird, 5 bis 40 Gew.-% bezogen auf die Gesamtmenge der Tinten-Zusammensetzung auf Wasserbasis beträgt.

18. Verfahren zur Herstellung von gefärbten Polyamidfasern nach Anspruch 1, wobei der Farbstoff mindestens ein Farbstoff ist, der ausgewählt wird aus sauren Farbstoffen und Direktfarbstoffen.

## Revendications

1. Procédé de production de fibres de polyamide colorées, comprenant une étape consistant à appliquer une composition d'encre à base d'eau contenant au moins un type de colorant choisi dans le groupe constitué de colorants acides, de colorants directs et de colorants réactifs, un composé ayant un poids moléculaire moyen compris entre 340 et 2200 représenté par la formule (1) suivante, et de l'éthylène glycol : 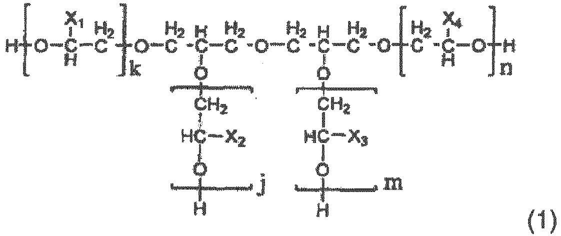 où X₁, X₂, X₃ et X₄ représentent chacun indépendamment un atome d'hydrogène ou un groupe méthyle ; et chacun de j, k, m et n représente un nombre, dont la somme est supérieure ou égale à 4 et inférieure ou égale à 40, à des fibres de polyamide en utilisant une imprimante à jet d'encre,
une étape consistant à fixer le colorant dans la composition d'encre à base d'eau appliquée dans ladite étape aux fibres de polyamide mentionnées ci-dessus par la chaleur, et
une étape consistant à laver le colorant non fixé restant dans les fibres de polyamide mentionnées ci-dessus.

2. Procédé de production de fibres de polyamide colorées selon la revendication 1, dans lequel l'ensemble de X₁, X₂, X₃ et X₄ dans la formule (1) sont des atomes d'hydrogène ou des groupes méthyle.

3. Procédé de production de fibres de polyamide colorées selon la revendication 1, dans lequel l'ensemble de X₁, X₂, X₃ et X₄ dans la formule (1) sont des groupes méthyle.

4. Procédé de production de fibres de polyamide colorées selon la revendication 1, dans lequel la teneur en éthylène glycol est comprise entre 5 et 35% en masse par rapport à la quantité totale de la composition d'encre à base d'eau.

5. Procédé de production de fibres de polyamide colorées selon la revendication 1, dans lequel la viscosité de la composition d'encre à base d'eau à 25°C se trouve dans la plage allant de 3 à 20 mPa·s.

6. Procédé de production de fibres de polyamide colorées selon la revendication 5, dans lequel la viscosité de la composition d'encre à base d'eau à 25°C se trouve dans la plage allant de 8 à 20 mPa·s.

7. Procédé de production de fibres de polyamide colorées selon les revendications 1 à 6, qui comprend en outre une étape consistant à prétraiter les fibres de polyamide où les fibres polyamides mentionnées ci-dessus, avant d'appliquer la composition d'encre à base d'eau, sont imprégnées d'une solution aqueuse contenant au moins un ou plusieurs type(s) d'agent(s) d'encollage et un régulateur de pH.

8. Procédé de production de fibres de polyamide colorées selon la revendication 1, dans lequel la composition d'encre à base d'eau contient en outre un solvant organique hydrosoluble autre que l'éthylène glycol.

9. Procédé de fabrication de fibres de polyamide colorées selon la revendication 8, dans lequel la composition d'encre à base d'eau contient un polyol autre que l'éthylène glycol comme solvant organique hydrosoluble.

10. Procédé de production de fibres de polyamide colorées selon la revendication 8 ou 9, dans lequel la composition d'encre à base d'eau contient une pyrrolidone comme solvant organique hydrosoluble.

11. Procédé de production de fibres de polyamide colorées selon la revendication 9, dans lequel la composition d'encre à base d'eau contient de la glycérine comme solvant organique hydrosoluble.

12. Procédé de production de fibres de polyamide colorées selon la revendication 10, dans lequel la composition d'encre à base d'eau contient la 2-pyrrolidone comme solvant organique hydrosoluble.

13. Procédé de production de fibres de polyamide colorées selon la revendication 9, dans lequel la teneur d'un polyol autre que l'éthylène glycol est comprise entre 5 et 15% en masse par rapport à la quantité totale de la composition d'encre à base d'eau.

14. Procédé de production de fibres de polyamide colorées selon la revendication 10, dans lequel la teneur de la pyrrolidone est comprise entre 0,5 et 5% en masse par rapport à la quantité totale de la composition d'encre à base d'eau.

15. Procédé de production de fibres de polyamide colorées selon la revendication 1, dans lequel la composition d'encre à base d'eau contient en outre, en tant que régulateur de pH, une trialkylamine en C1 à C4 qui peut être substituée par un groupe hydroxy.

16. Procédé de production de fibres de polyamide colorées selon la revendication 1, dans lequel la teneur en eau est comprise entre 30 et 50% en masse par rapport à la quantité totale de la composition d'encre à base d'eau.

17. Procédé de production de fibres de polyamide colorées selon la revendication 1, dans lequel la teneur du composé ayant un poids moléculaire moyen en nombre compris entre 340 et 2200 représenté par la formule (1) décrite ci-dessus est comprise entre 5 et 40% en masse par rapport à la quantité totale de la composition d'encre à base d'eau.

18. Procédé de production de fibres de polyamide colorées selon la revendication 1, dans lequel le colorant est au moins un colorant choisi parmi des colorants acides et des colorants directs.
